## Europäisches Patentamt
## European Patent Office
## Office européen des brevets

(19)

(11) Publication number: **0 042 712**
A2

(12) # EUROPEAN PATENT APPLICATION

(21) Application number: **81302682.0**

(22) Date of filing: **16.06.81**

(51) Int. Cl.³: **G 02 C 5/14**

(30) Priority: **23.06.80 GB 8020490**

(43) Date of publication of application:
**30.12.81 Bulletin 81/52**

(84) Designated Contracting States:
**AT BE CH DE FR GB IT LI LU NL SE**

(71) Applicant: **Blackstone, John**
**44 Myrtleside Close Off Green Lane**
**Northwood, Middlesex(GB)**

(72) Inventor: **Blackstone, John**
**44 Myrtleside Close Off Green Lane**
**Northwood, Middlesex(GB)**

(74) Representative: **Walters, Frederick James et al,**
**Urquhart-Dykes & Lord 47 Marylebone Lane**
**London W1M 6DL(GB)**

(54) Spectacles and means for retaining same in use.

(57) A pair of spectacles has a frame which includes a lens retaining part 1 and side arms 2 which are hinged at 3 to the part 1. Moulded on the arms 2 are ear pieces 5. Adhesively secured on the ear pieces 5 are layers of friction material 6 which are perspiration absorbent and contact the head of the wearer to prevent the frames slipping down the nose. The layers 6 may be of fabric material or chammy leather and may have a perspiration absorbent backing pad to provide a cushioning effect on the wearer. If required, the layer 6 can be located in a recess moulded into the ear pieces 5. Desirably a waterproof layer is provided between the adhesive and the friction material.

FIG.1.

Croydon Printing Company Ltd.

- 1 -

## DESCRIPTION

This invention relates to a pair of spectacles
and to means for retaining spectacles on a wearer
during use.

Conventionally a pair of spectacles comprises
a frame within which the lenses are retained, a nose
piece which is usually incorporated as part of the
frame and a pair of side arms for straddling the head
of the wearer and which are usually hinged to the
part of the frame which carries the lenses.   Generally
the side arms have shaped ear pieces which are located
behind the auricles of the ears of the wearer and these
together with the nose piece usually serve to retain
the spectacles in the prescribed or optimum viewing
position.

It is a common difficulty or inconvenience for spectacles to fall down the nose particularly if they are of a heavy structure, say with a heavy lens prescription or/and a heavy frame; if the wearer is perspiring as in a hot climate; during an energetic activity, or if they are worn with the head inclined downwardly. Such dropping of the spectacles down the nose is clearly inconvenient where the top rim of the lenses frame may interfere with vision and there may be some discomfort. For spectacles having lenses which are made to prescription there are even further disadvantages which can result from the aforementioned dropping effect; with prescription spectacles the lenses are prescribed for use at a predetermined location on the wearer, in particular at a correct back vertex distance from the eyes and deviations from this distance which result from the spectacles dropping create unstable vision and can lead to eye strain (especially with multi-focal lenses).

In an attempt to alleviate the difficulty of spectacle dropping, prescription spectacles are usually made with the side arms of a predetermined length and with the ear pieces appropriately shaped to engage closely over the ears; such a fitting is often expensive and can lead to discomfort if the ear pieces are too tight a fit (for example tight fitting ear pieces may cause regions of soreness around the ears especially when the wearer perspires and also a tight fitting frame can cause soreness on the bridge of the nose by pressure from the nosepiece. For non-prescription spectacles such as sun spectacles and safety spectacles it is usual for the wearer to select a pair which initially seem comfortable and as such are likely to slip down the nose during use.

In an attempt to alleviate the spectacles dropping (or frames slipping) down the nose it has been proposed to provide ear pieces of spring wire which tightly enclose the rear of the ears, pressure from which can soon cause discomfort and generally such forms of ear pieces are regarded as unsightly and unfashionable for every day wear. It has also been proposed to wrap rubber bands around the ear pieces, these bands are unsightly, frequently cause discomfort and can lead to skin disorders by prolonged contact with the skin in the presence of perspiration. Another proposals is to provide a band which extends around the back of the

- 4 -

head between the side arms to hold on the spectacles - this is widely regarded as unacceptable for every day use.

U.K. Patent No. 1,372,713 discloses the use of a small elastic pad having a bore by which it is adjustably received and easily replaceable on an arm of spectacles; this pad is intended to co-operate with the mastoid cavity of the wearer to maintain the spectacles in position. The pad is preferably of rubber and as such, in the presence of perspiration, can cause irritation or allergic disorders to develop by prolonged and tends to become slippery contact with the skin/ In an attempt to alleviate these problems the pad may be designed with a cavity which accommodates an anti-allergic product so that its manufacture becomes relatively expensive and its general appearance somewhat unsightly and bulky to the extent that when the spectacles are being put on, the pad can slide·along the frame arm by its contact with the side of the head or the hair of the wearer.

U.K. Patent No. 1,372,417 also discloses the use of rubber pads. on the ear pieces of spectacles, in this instance primarily to retain the arms of the spectacles in a folded condition, but similarly to the proposal in U.K. 1,372,713, the rubber pads in the presence of perspiration/can lead to skin disorders and be a
tend to become slippery,
source of irritation to the wearer.

It is an object of the present invention therefore to provide an inexpensive, simple and convenient means for alleviating spectacles from slipping down the nose and which alleviates the disadvantages described above.

According to the present invention there is provided a pair of spectacles having side arms for straddling the head and wherein each of the side arms carries a layer of friction material which is intended to contact the head of the wearer and provide increased frictional characteristics with the head as compared with the material of the arms in the absence of said friction material, said friction material being perspiration absorbent, being adhesively secured on ear pieces of the side arms which ear pieces are to be received behind the auricles of the ears of a wearer and substantially conforming to the shape of the ear pieces.

Further according to the present invention there is provided means to be applied to the ear piece of a pair of spectacles to provide increased frictional characteristics with the head and profiled to conform with the general shape of said ear piece which comprises a layer of perspiration absorbent friction material which carries an adhesive by which said layer is to be secured to an ear piece.

By the phrase "a pair of spectacles" as used· throughout this Specification and appendant claims we include vision aids as may be required for near vision such as working under magnification or distance vision for the partially sighted.

By the present invention the ear pieces of the side arms of a pair of spectacles each have adhesively secured thereto a layer of friction material which is located on those arms to provide increased friction characteristics between the side arms and the head of the wearer and an essential characteristic of which is the perspiration absorbency of the material. Conventionally spectacle side arms are made of a metal, plastics or metal coated plastics material and consequently a small piece of the friction material adhesively applied to each side arm can increase the friction of the side arms with the head of the wearer considerably as compared with the metal or plastics side arms in the absence of the friction material. Furthermore, by being perspiration absorbent, prolonged contact of the friction material with the skin in the presence of perspiration alleviates skin irritation and the possibility of skin disorders (as mentioned above in connection with the prior proposed rubber-type spectacle retaining pads) and also alleviates the likelihood of the frictional characteristics between the friction material and the skin being reduced in the presence of perspiration to such an extent that the spectacles are insufficiently supported to prevent them slipping down the nose during normal activities. Preferably the friction material is of a natural fibre or textile such as wool or cotton or of a soft leather such as chammy-leather and is washable for hygiene. The increased friction characteristics achieved by use of chammy leather material have been shown to be quite adequate in alleviating frame slippage down the nose for virtually all forms of spectacles which it will be appreciated are a reasonable fit in the first instance.

This provides the advantage of maintaining the lenses in the correct position for which they may have been prescribed and/or preventing the upper rims of the frames from coming into focus.   The invention also alleviates the requirement for prescribed spectacles to be so accurately fitted as would hitherto have been necessary, for example the length of the side arms to the bends where the ear pieces are normally located in those side arms is not as critical.   Heavier spectacles or lenses may be prescribed than would normally be acceptable, particularly with thin side arms where large or heavy frame eye size parts can be provided which are currently popular for fashionable spectacles.   The use of thin side arms is desirable even with heavy fronted fashionable spectacles since it is then possible to provide improved peripheral vision through the sides of the spectacles.   By use of the layers of friction material it may be possible to prescribe spectacles whereby the lenses are held closer to the face for a wider field of view and to provide a spectacle fitting which it may be possible to maintain for longer periods than would otherwise be acceptable.   By having the layers of friction material extending over the ear pieces and conforming generally to the shape of those pieces, relatively large surface areas of the material can be provided, unobtrusively, for contact with the head of the wearer and this can serve to retain the spectacles with less pressure behind the ears of the wearer.

The exposed surface of the friction material which contacts the head of the wearer may be of a coarse or smooth nature, usually the former, to give the required frictional characteristics and possibly depending upon the sensitivity of the skin with which the friction material may be in contact.   For providing high friction characteristics the exposed surface of the friction material may be provided with ridges, bosses or other small protruberances.   If required, the layers of friction material can be in the form part of pads which provide a cushioning effect on the wearer;   for example the layers of friction material can be backed by a padding of foam rubber or resilient plastics material.

Because of the perspiration absorbent nature of the friction material and also the likelihood that the friction material will be wetted otherwise, for example by washing, it is a preferred feature of the present invention that a layer of barrier material is provided between the adhesive and the friction material to alleviate degradation of the adhesive from perspiration absorbed by or other wetting of the friction material. This barrier layer, which is preferably of a flexible and pliable/nature, may also act as a thermal barrier to assist in maintaining the integrity of the adhesive. The waterproof material is conveniently of a settable nature which is initially painted or sprayed on to a face of the friction material where it is allowed to set and form a coating which bonds to the friction material; a preferred waterproof material is that supplied by Associated Adhesive Limited and sold under the Trade Mark "GLOY PVC". The adhesive is applied to the waterproof material; preferably the adhesive is in the form of a sheet or tape carrying adhesive on both its side faces, one of said faces being secured to the waterproof layer so that the other is available to

waterproof or water resistant

secure the friction material at the appropriate position on the spectacles.    A preferred adhesive is a double sided adhesive tape supplied by Autowrappers Limited and known as "D.C. Tape Product No. 1522".

Most likely the layers of friction material will be purchased as a pre-packed set for self adhesion by a spectacle wearer to his spectacles;  the material can of course be applied during manufacture of the spectacles and may be adhesively secured in recesses in the ear pieces ( which recesses are preferably complementary in shape of the layers of the friction material which they respectively receive).

Embodiments of the present invention will now be described by way of example only, with reference to the accompanying illustrative drawings, in which:-

Figure 1 is a perspective view of part of a pair of spectacles and shows a layer of friction material applied to the ear pieces of a side arm of the spectacles;

Figure 2 shows a second embodiment in which part on an ear piece of a side arm (which is illustrated in part section) is recessed and receives a pad of friction material, and

Figure 3 is a section illustrating the make up of a friction material (with its associated adhesive) which may be incorporated in the embodiments of Figures 1 and 2.

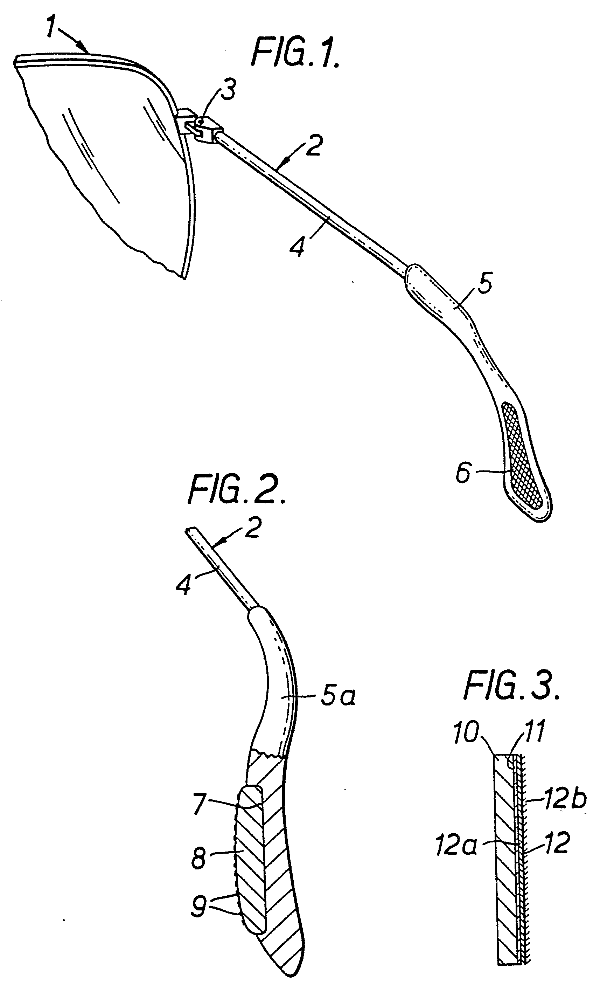

A pair of spectacles in Figure 1 is predominantly of conventional form and comprises a frame which has a lens retaining part 1 and a pair of side arms 2 (of which, for convenience, only one side arm is illustrated, it being realised that the other side arm is identical). The side arm 2 is hingedly mounted at 3 on the part 1. The side arm 2 comprises a metal rod 4 and the end of said arm remote from the part 1 is formed as a shaped plastics ear piece 5 which is moulded on to the rod 2 to hook over the ear and behind the auricle of a person wearing the spectacles. Carried on the ear piece 5 is a layer 6 of perspiration absorbent friction material in the form of a chammy-leather piece, a cloth or other textile fabric. The layer 6 is self adhesively secured to the plastics of the ear piece 5 so that the exposed surface of the layer 6 will contact the head of the person wearing the spectacles to provide increased frictional characteristics therewith as compared with the plastics material of the basic ear piece 5. For aesthetic purposes and also to provide a relatively large surface area for contact with the head of the wearer (thereby providing high friction characteristics and alleviating the formation of pressure spots behind the ear) the layer 6 is shaped to conform generally with the shape of the ear piece 5 on which it is located. The layer of material 6 may be coloured as appropriate to match the frame.

In the embodiment of Figure 2 the ear piece 5a is moulded to include a shallow recess 7 within which is located a complementary shaped layer of friction material in the form of a pad 8 of a woollen cloth or chammy leather which may be backed by foamed rubber, sponge or other perspiration absorbent material. As illustrated the pad 8 stands slightly proud of the recess 7 to provide a cushioning effect with the head of the wearer and may have an array of small ridges or bosses 9 formed on its exposed surface to provide high frictional characteristics with the head of the wearer. The pad 8 is retained in the recess 7 by an adhesive.

Figure 3 shows a section through a preferred arrangement for the friction material which may be applied to the ear pieces 5 and 5a and comprises a perspiration absorbent friction material layer 10, which is preferably chammy leather or wool cloth. Applied to a face of the layer 10 is a waterproof layer 11 formed from the material sold by Associated Adhesive Limited under the Trade Mark "GLOY PVC". The material 11 while in liquid or paste form is painted or sprayed on to the layer 11 where it is allowed to set to provide a pliable and flexible waterproof barrier which bonds to the layer 10. Applied to the waterproof layer 11 is a double sided adhesive sheet or tape 12, such as that sold by Autowrappers Limited as "D.C. Tape Product No. 1522". One adhesive face 12a of the sheet 12 is secured to the layer 11 while the other adhesive face 12b is available to secure the layer 10 to the ear piece 5 or within the recess 7. The laminate formed by the layers 10, 11 and 12 will be shaped by cutting or stamping from the sheet into an appropriate size and profile for fitting to the ear pieces.   As will be apparent from
Figure 3 the waterproof barrier 11 alleviates
degradation of the adhesive on the sheet 12 (particularly
that on the adhesive face 12a) from perspiration which
will be absorbed in the material 10 and also during
washing or other wetting of the friction material.

- 1 -

CLAIMS

1. A pair of spectacles having side arms for straddling the head and wherein each of the side arms carries a layer of friction material which is intended to contact the head of the wearer and provide increased frictional characteristics with the head as compared with the material of the arms in the absence of said friction material, said friction material being perspiration absorbent, being adhesively secured on ear pieces of the side arms which ear pieces are to be received behind the auricles of the ears of a wearer and substantially conforming to the shape of the ear pieces.

2. A pair of spectacles as claimed in claim 1 in which a layer of barrier material is provided between the adhesive and the friction material to alleviate degradation of the adhesive from perspiration absorbed by, or other wetting of, the friction material and by body heat whilst the spectacles are worn.

3.  A pair of spectacles as claimed in claim 2 in which the barrier layer comprises a pliable material which is bonded to the friction material.

4.  A pair of spectacles as claimed in either claim 2 or claim 3 in which the adhesive comprises a sheet or tape having adhesive on both its side faces one of which side faces is secured to the barrier layer and the other of which secures the friction material to the ear piece.

5.  A pair of spectacles as claimed in any one of the preceding claims in which the layer of friction material comprises a perspiration absorbent pad which provides a cushioning effect on the head of the wearer.

6.  A pair of spectacles as claimed in any one of the preceding claims in which the layer of friction material comprises chammy leather or a textile fabric.

7.  A pair of spectacles as claimed in any one of the preceding claims in which the layers of friction material are located in recesses in the respective ear pieces.

8. Means to be applied to the ear piece of a pair of spectacles to provide increased frictional characteristics with the head and profiled to conform with the general shape of said ear piece which comprises a layer of perspiration absorbent friction material which carries an adhesive by which said layer is to be secured to an ear piece.

9. Means as claimed in claim 8 in which a layer of barrier material is provided between the adhesive and the friction material to alleviate degradation of the adhesive from perspiration or other wetting of the friction material and by body heat whilst the spectacles/ are worn.

10. Means as claimed in claim 9 in which the adhesive comprises a sheet or tape having adhesive on both of its side faces one of which side faces is secured to the barrier layer and the other of which is available for securing the friction material to the ear piece.

0042712

1/1

FIG.1.

FIG.2.

FIG.3.